# EUROPÄISCHE PATENTSCHRIFT

(11) **EP 1 591 773 B1**
(45) Veröffentlichungstag und Bekanntmachung des Hinweises auf die Patenterteilung: **20.08.2008**
(21) Anmeldenummer: 05005839.5
(22) Anmeldetag: 17.03.2005
(51) Int. Cl.: G01N 21/64, H01J 61/42, F21V 9/00

(54) **Anordnung zur Fluoreszensverstärkung**
Device for enhancing fluorescence
Dispositif de renforcement de fluorescence

(30) Priorität: 17.03.2004 DE 102004013388
(43) Veröffentlichungstag der Anmeldung: 02.11.2005
(73) Patentinhaber: Schott AG, 55122 Mainz (DE)
(72) Erfinder: Schultz, Niko, Dr., 55270 Mainz (DE); Conzone, Samuel D., Clarks Summit PA 184411 (US); Becker, Otmar, Dr., 63225 Langen (DE); Haines, Dan, Lake Ariel PA 18436 (US); Pawlowski, Edgar, 55271 Stadecken-Elsheim (DE); Scheumann, Volker, 55124 Mainz (DE)
(74) Vertreter: Blumbach - Zinngrebe

(56) Entgegenhaltungen:
- WO-A-02/48691
- WO-A-98/53304
- DE-A- 10 201 492
- US-A1- 2004 184 256
- LITFIN G.: 'Technische Optik in der Praxis', 2001, SPRINGER, BERLIN * Seite 61 - Seite 68 *
- KAISER N.: 'Design optischer Schichtsysteme' VAKUUM IN FORSCHUNG UND PRAXIS Bd. 13, Nr. 6, 2001, Seiten 347 - 353

## Beschreibung

Die Erfindung bezieht sich auf ein Substrat mit einer insbesondere dielektrischen Beschichtung, welche die Fluoreszenzanregung eines auf diesem beschichteten Substrat befindlichen Materials wesentlich verstärkt. Die Erfindung betrifft insbesondere auch einen mit einer solchen Beschichtung versehenen Probenträger, der die Fluoreszenzanregung einer Probe und damit das zu detektierende Fluoreszenzlichtsignal verstärkt und das Signal-Rauschverhältnis bei der Fluoreszenzmessung wesentlich verbessert.

Die Fluoreszenz-Mikroskopie ist eine gebräuchliche Technologie, die insbesondere im Bereich der Molekularbiologie Anwendung findet. Sie wird zur Analyse biologischer Materialien genutzt, beispielsweise von Nuclein-Säuren (DNA, RNA) und Proteinen (Enzyme etc.). Die zu untersuchenden Stoffe werden mit Fluoreszenzfarbstoffen markiert und so in einem Fluoreszenzscanner oder Fluoreszenz-Mikroskup sichtbar gemacht.

Insbesondere auf dem Gebiet der Bio-Chip-Technologie kommt der Fluoreszenspektroskopie zur Analyse der sogenannten Mikroarrays große Bedeutung zu. Die DNA-Array-Technik basiert beispielsweise auf der Hybridisierung von Nukleinsäuren (Watson Crick-Base-Pairing). Dabei lagern sich zwei komplementäre Nukleinsäure-Einzelstränge über Wasserstoffbrückenbindungen zwischen ihren hydrophoben Pyrin und Pyrimidin-Basen zusammen, um den Wasserkontakt zu minimieren. Das Prinzip mit markierten Nukleinsäuren andere Nukleinsäuren zu analysieren nutzte erstmals Ed Southern (Southern Blot).

Bio-Chips bestehen typischerweise aus einem auf ein Glassubstrat aufgebrachten organischen Film, auf den punktförmig (ca. 100 bis 150 µm Durchmesser) einsträngiges DNA- Material aufgebracht wurde. Eine erfolgreiche Anbindung der zu analysierenden, mit Fluoreszenzfarbstoff versehenen einstrangigen DNA an die punktförmig auf den organischen Film aufgebrachte einsträngige DNA ist durch einen fluoreszierenden DNA-Dot nachweisbar. Statt einer vollständigen DNA können auch kurzkettige Moleküle (Oligos) analysiert werden.

Eine hohe Detektionsempfindlichkeit ist in jedem Fall eine notwendige Voraussetzung für den erfolgreichen Einsatz von Biochips als empfindliche Sensor systeme. Diese Detektionsempfindlichkeit wird im wesentlichen durch die Stärke des zu detektierenden Signals und durch das Signal-Rausch-Verhältnis bestimmt. Ursachen für störende Hintergrundsignale sind beispielsweise Autofluoreszenz des Substrates oder von Verunreinigungen oder der im Anregungslicht befindlichen optischen Bauteile sowie intrinsisches Rauschen im Detektor selbst. Die Autofluoreszenz des Substrates oder der optischen Bauteile kann dabei weitestgehend durch Verwendung nicht oder nur gering fluoreszierender Materialien eingeschränkt werden. Weitere Möglichkeiten, störende Rauschsignale während der Messung zu eliminieren, bieten gepulste oder modulierte Anregungen.

Außerdem gibt es Lösungsansätze hinsichtlich der Verbesserung der Substrate bzw. Probeträger. So wird beispielsweise in der US 5,552,272 vorgeschlagen, ein Substrat mit einer Antireflexionsschicht zu versehen, die eine Reflexion des Anregungslichtes einer bestimmten Wellenlänge unterdrückt und damit das Rauschsignal reduziert. Gemäß der US 5,552,272 hat diese Antireflexionsschicht keinerlei Auswirkung auf die Generation des Fluoreszenzsignals und es kann ein stärkerer Kontrast zwischen Signal und Rauschen erzielt werden. Hier bleibt das maximal zu erreichende Signal-Rausch-Verhältnis SNRₘₐₓ auf SNRₘₐₓ = S^{0,5} begrenzt, wobei S die Stärke des Fluoreszenzsignales ist.

Zur weiteren Verbesserung der Anregung der Fluoreszenz als auch der Fluoreszenzemissions-Detektion und damit einer höheren Meßempfindlichkeit wird in der WO 98/53304 als Probenträger ein Substrat mit einer reflektierenden, metallischen Oberfläche und einer darauf befindlichen transparenten dielektrischen Schicht offenbart. Die transparente dielektrische Schicht hat eine Dicke, bei der die optische weglänge von der Schichtoberfläche bis zur reflektierenden Oberfläche des Substrates einem ungeraden Vielfachen der λ/4-Wellenlänge des Anregungslichtes entspricht. Somit ist die Schichtdicke der transparenten Schicht bestimmt durch die Wellenlänge des Anregungslichtes, den Brechungsindex n des Schichtmaterials und den Einfallswinkel des Strahls. Bei einer derartigen Dimensionierung der dielektrischen Schicht und Anordnung auf einer reflektierenden, metallischen Oberfläche bildet sich an der Schichtoberfläche der dielektrischen Schicht ein Maximum in der elektrischen Feldamplitude aufgrund der konstruktiven Überlagerung des einfallenden und reflektierten Anregungslichts und der daraus resultierenden stehenden Welle des Anregungslichtes und des reflektierten Anregungslichtes der Wellenlänge λ.

Die reflektierende metallische Oberfläche wird erhalten, indem das Substrat selbst ein Metall ist oder mit einem Metall beschichtet ist und dient hauptsächlich der Reflexion des Anregungslichtes. Solche reflektierenden Metalle sind vorzugsweise Aluminium, Silber, Gold oder Rhodium, die für ein breites Spektrum des Anregungslichtes geeignet sind. Die transparente dielektrische Schicht, auf der sich unmittelbar die Probe befindet, wirkt als eine Art Abstandsschicht zur reflektierenden metallischen Oberfläche und ermöglicht eine Positionierung der Probe in der Nähe eines Maximums des elektrischen Feldes des Anregungsstrahls. Damit kann die Probe im Bereich der maximalen Intensität der Anregung angeordnet und die Fluoreszenz erhöht werden. Jedoch ist der Einsatz dieser Probenträger zum einen auf eine bestimmte Anregungswellenlänge begrenzt (definiert durch die Dicke der Abstandsschicht) und zum anderen durch die Oxidationsanfälligkeit der metallischen Schichten eingeschränkt.

Aus der WO 02/48691 ist eine Vorrichtung zur Verstärkung von Breitband-Fluoreszenz offenbart, bei welchem auf einer Unterlage ein dielektrischer Schichtstapel aufgebracht ist, welcher im Unterschied zum metallischen Spiegel, wie er aus der WO 98/53304 bekannt ist, als dielektrischer Spiegel wirkt.

Die US 6,552,794 B2 offenbart eine optische Detektionsmethode mit verbesserter Meßempfindlichkeit mit einem mit einer reflektierenden Schicht versehenen Substrat als Probenträger, welcher das von der Probe in Richtung Substrat emittierte Fluoreszenzlicht reflektiert und mit einer optimierten optischen Detektionsanordnung, die sowohl das in ihre Richtung emittierte Fluoreszenzlicht, als auch das von der Schicht reflektierte emittierte Fluoreszenzlicht erfassen kann. Dabei kann die Meßgenauigkeit, bei idealer Reflexion der emittierten Fluoreszenzstrahlung, um den maximalen Faktor 2 verbessert werden. Ein wesentlicher Nachteil dieser Anordnung besteht darin, dass nicht verhindert wird, dass auch das Substrat angeregt wird und fluoresziert und somit die Messung negativ beeinflusst wird. Außerdem ist die theoretische Erhöhung der Fluoreszenz auf einen Faktor 2 begrenzt.

Die Anforderungen an die Fluoreszenzdetektion sind weiter gestiegen, vor allem im Bereich der Bio-Chips. In den meisten Fällen ist die alleinige Feststellung von Fluoreszenz nicht ausreichend, sondern eine sehr genaue Intensitätsbestimmung zur vergleichenden Analyse mit anderen Bio-Chips notwendig. Je genauer also die Messungen sind, desto genauer kann die Analyse sein.

Der Erfindung liegt daher die Aufgabe zugrunde, die Anregung und/oder Detektion von Fluoreszenz sowie das Signal-Rausch-Verhältnis bei Fluoreszenzmessungen weiter zu verbessern.

Eine weitere Aufgabe der Erfindung ist es, die Anregung und/oder Detektion von Fluoreszenz flexibler zu gestalten.

Die Lösung gelingt mit einer Anordnung zur Fluoreszenzverstärkung gemäß Anspruch 1. Die Anordnung umfasst ein Substrat, ein auf das Substrat aufgebrachtes fluoreszenzverstärkendes dielektrisches Schieht system und ein auf dem Schicht system befindliches dünnes fluoreszenzfähiges Material, welches bei Bestrahlung mit Anregungslicht einer Anregungswellenlänge λ_{A} Licht im Emissionswellenlängenbereich λ_{E} emittiert Das Schichtsystem umfasst ein zumindest das Anregungslicht reflektierendes Interferenzschichtsystem aus hoch- und niedrigbrechenden dielektrischen Schichten.

Wesentlich ist, daß das Design des Interferenzschichtsystems außerdem eine vertikale Anordnung des fluoreszenzfähigen Materials, welches auf die fluoreszenzverstärkende Beschichtung aufgebracht ist, im Bereich des Maximums der elektrischen Feldamplitude, insbesondere auch im Bereich des Maximums des Quadrats der elektrischen Feldamplitude der sich bei Bestrahlung mit dem Anregungslicht ausbildenden stehenden Welle mit der Anregungswellenlänge λ_{A} ermöglicht.

Mit dem Begriff "vertikale Anordnung" ist im Sinne der Erfindung eine Anordnung entlang einer Richtung senkrecht zur Oberfläche des Interferenzschichtsystems gemeint.

Neben der rein reflektiven Eigenschaft des Designs ist dementsprechend noch eine zweite Eigenschaft ganz wesentlich: Im Bereich der Oberfläche des Interferenzsystems müssen sich das einfallende und reflektierte Anregungslicht der Wellenlänge λ_{A} konstruktiv überlagern so dass dort zur Ausbildung eines Maximums der elektrischen Feldamplitude kommt. Im idealen Fall verdoppelt sich durch konstruktive Interferenz an der Oberfläche die Feldstärke, was zu einer lokalen Vervierfachung der Lichtintensität führt, da sie physikalisch mit dem Quadrat der Feldstärke skaliert. Mit dem Bereich der Oberfläche ist hier insbesondere der Bereich gemeint, in welchem das fluoreszenzfähige Material angeordnet ist oder wird. Dies ist bevorzugt ein Bereich in vertikaler Richtung beginnend mit der Oberfläche des Interferenzschichtsystems bis zu einem Abstand von einer Viertelwellenlänge oberhalb der Oberfläche.

Dementsprechend bewirkt das Interferenzschichtsystem der Anordnung bevorzugt eine derartige Phasenbeziehung des Anregungslichts, dass es unmittelbar an der Oberfläche oder im Bereich einer halben Wellenlänge, bevorzugt einer viertelwellenlänge oberhalb der Oberfläche zwischen einfallendem und reflektierten Anregungslicht zur konstruktiven Interferenz kommt und sich eine maximale elektrische Feldstärke im Bereich des aufgebrachten oder aufbringbaren fluoreszierenden Materials ausbildet.

Um insgesamt einen verstärkenden Effekt zu erreichen, sollte die Schichtdicke des fluoreszenzfähigen Materials bevorzugt eine halbe Wellenlänge nicht überschreiten, damit sich verstärkende und abschwächende Effekte nicht ausmitteln.

Ein verstärkender Effekt kann auch noch erreicht werden, wenn das Maximum der elektrischen Feldamplitude nicht an oder oberhalb der Oberfläche des Interferenzschichtsystems, sondern etwas unterhalb der Oberfläche liegt. Insbesondere ist dies der Fall, wenn das Maximum weniger als eine Viertelwellenlänge unterhalb dieser Oberfläche liegt.

Besonders bevorzugt wird das Interferenzschichtsystem weiterhin so ausgebildet, daß die Phasenbeziehung des Anregungslichts entlang der Oberfläche im Bereich des fluoreszenzfähigen Materials gleich bleibt. Damit wird vermieden, daß sich entlang der Oberfläche im Bereich des fluoreszenzfähigen Materials neben Intensitätsmaxima auch Intensitätsminima ergeben.

Insbesondere ist es von Vorteil, wenn das Interferenzschichtsystem so ausgelegt ist, daß die Oberfläche der Beschichtung etwas unterhalb des räumlichen Maximums der Lichtintensität des Anregungslichts angeordnet ist, so daß dann das Maximum der Lichtintensität innerhalb der fluoreszenzfähigen Beschichtung oder Schicht liegt. Beispielsweise kann dazu die Oberfläche der fluoreszenzfähigen Beschichtung im Bereich bis höchstens 50 Nanometern unterhalb des Maximums des Quadrats der Feldamplitude liegen, so daß fluoreszenzfähige Beschichtungen, welche dicker, insbesondere etwa doppelt so dick wie diese Abweichung sind, besonders effektiv zur Fluoreszenz angeregt werden können.

Die Anregungswellenlänge λ_{A} kann dabei ein enger spektraler Bereich sein, wie dieser in kommerziellen Spektrometern vorkommt und durch Bandpassfilter vor einer Weisslichtquelle definiert wird.

Die fluoreszenzverstärkende Beschichtung besitzt zwei Eigenschaften, beziehungsweise übernimmt damit zwei Funktionen: (i) das Ausbilden einer stehenden Welle bei der Anregungswellenlänge λ_{A} durch hohe Reflexion, beziehungsweise eine Ausbildung als reflektierende Beschichtung und (ii) eine designbedingte Bereitstellung von hoher Feldstärke an der Oberfläche, beziehungsweise im Bereich der Oberfläche dort wo das das fluoreszenzfähige Material angeordnet ist oder wird aufgrund einer durch die Wahl der Abfolge und Schichtdicke der Einzelschichten des Interferenzschichtsystems vorgegebenen Phasenbeziehung von einfallendem und reflektiertem Anregungslicht.

Der Bedingung (ii) entspricht zugleich eine designbedingte vertikale Anordnung des fluoreszenzfähigen Materials in dem Bereich der stehenden Welle, die eine maximale E-FeldAmplitude des Anregungslichtes aufweist, wobei eine maximale Anregung von Fluoreszenz ermöglicht wird. Damit kann mit einfachen Mitteln eine wesentliche Verstärkung der Fluoreszenz erzielt werden.

Für einen optimalen Effekt der Fluoreszenzerhöhung ist es vorteilhaft, wenn sich das Maximum der elektrischen Feldamplitude der stehenden Welle in der Schichtdickenmitte des fluoreszenzfähigen Materials befindet oder das Material so dünn ist, dass sich das Maximum der elektrischen Feldamplitude der stehenden Welle an der Grenzfläche der Beschichtung zum fluoreszenzfähigen Material befindet. Somit müssen die Dicke des fluoreszenzfähigen Materials und die Gestaltung des Designs der fluoreszenzverstärkenden Beschichtung aufeinander abgestimmt sein.

Aus der Größenordnung der Anregungswellenlänge λ_{A} ergibt sich dann beispielsweise eine sinnvolle mögliche Größenordnung für die Dicke des fluoreszenzfähigen Materials. Für ein Design der Beschichtung, bei welchem sich das Maximum der elektrische Feldamplitude der stehenden Welle an der Grenzfläche der Beschichtung zum fluoreszenzfähigen Material befindet, sollte das fluoreszenzfähige Material eine Dicke aufweisen, welche dünn im Verhältnis zur Anregungswellenlänge λ_{A} ist, vorzugsweise unter der Hälfte und besonders bevorzugt unter einem Viertel der Anregungswellenlänge λ_{A} liegt.

Die einfachsten Designs mit dem größten Effekt werden mit Interferenzschichtsystemen aus abwechselnd aufeinanderfolgenden hochbrechenden Schichten (H) und niedrigbrechenden Schichten (L) erzielt, welche jeweils eine optische Schichtdicke aufweisen, die einem Viertel der Anregungswellenlänge λ_{A} entspricht. Ein solches Design kann auf der Substratoberfläche mit einer hoch- oder niedrigbrechenden Schicht beginnen und muss eine niedrigbrechende Schicht an der Grenzfläche zum fluoreszenzfähigen Material aufweisen. Typische Designs weisen die Form
Substrat / (HL)ⁿ / fluoreszenzfähiges Material oder
Substrat / L / (HL)ⁿ / fluoreszenzfähiges Material
mit n > 1 auf, wobei die Reflexion des Anregungslichtes erhöht und damit die Wirkung der Beschichtung verbessert wird, wenn n ≥ 4 und insbesondere n ≥ 8 ist.

Derartige Designs reflektieren das Anregungslicht und bilden an der Oberfläche eine stehende Welle mit einem Maximum der E-Feldamplitude aus. Designs mit höherer Reflexion weisen dabei eine höhere elektrische Feldamplitude E der stehenden Welle auf, als weniger reflektive Designs. Die Fluoreszenzanregung steigt proportional zu E². Da sich an der Oberfläche derartiger Designs ein Maximum der elektrischen Feldamplitude der stehenden welle ausbildet, kommt es zu einer maximalen Anregung des auf dieser Oberfläche befindlichen, entsprechend dünnen, fluoreszenzfähigen Materials.

Ähnliche Ergebnisse kann man beispielsweise aber auch mit abweichenden Designs erzielen, beispielsweise mit Interferenzschichtsystemen wie vor beschrieben, die außerdem noch doppelt aufeinanderfolgende hochbrechende Schichten (H) und/oder doppelt aufeinanderfolgende niedrigbrechende Schichten (L) aufweisen. Diese sogenannten Lambda-Halbe-Schichter können sich an jeder Stelle eines Designs mit abwechselnd hoch- und niedrigbrechenden Schichten befinden.

Es gibt noch eine Vielzahl weiterer Designs, die im Rahmen der Erfindung liegen und welche ebenfalls eine hohe elektrische Feldamplitude bei der Anregungswellenlänge an der Oberfläche des Interferenzschichtsystems oder im Inneren des fluoreszenzfähigen Materials und eine gute Reflexion des Anregungslichtes aufweisen. Dafür kommen auch Interferenzschichtsysteme in Frage, deren einzelne Schichten von der optischen Schichtdicke der Viertelwellenlänge des Anregungslichtes abweichen und/oder die aus mehr als zwei Materialien bestehen. Diese weisen jedoch bei gleicher Fluoreszenzverstärkung im allgemeinen ein komplizierteres oder aufwendigeres Design auf.

Weitere geeignete Ausführungen der vor beschriebenen fluoreszenzverstärkenden Beschichtungen, insbesondere für Anordnungen zur Fluoreszenzmessung, sind optische Filterdesigns, welche überwiegend Licht im Bereich der Anregungswellenlänge λ_{A} - 20 nm ≤ λ_{A} ≤ λ_{A} + 20 nm, vorzugsweise λ_{A} - 10 nm ≤ λ_{A} ≤ λ_{A} + 10 nm reflektieren und deren Reflexionsgrad in diesem Bereich mehr als 50 %, vorzugsweise mehr als 80 % beträgt.

Anordnungen, deren Interferenzschichtsystem ein optischer Filter ist, welcher Licht zumindest im Bereich der Anregungswellenlänge λ_{A} reflektiert und im Bereich der Emissionswellenlänge λ_{E} transmittiert, sind ebenfalls mögliche geeignete und vorteilhafte Ausführungsformen, insbesondere dann, wenn die Fluoreszenz nicht in Reflexion gemessen oder genutzt wird, sondern in Transmission durch das Substrat. Das setzt selbstverständlich voraus, das in diesem Fall auch das Substrat durchlässig für das Emissionslicht ist. Mögliche Anwendungsfälle sind Beleuchtungskörper, welche von der Innenseite angeregt werden und Fluoreszenzlicht nach außen abgeben sollen. Ein derartiger Beleuchtungskörper mit einem erfindungsgemäßen Schichtsystem kann insbesondere eine Fluoreszenzröhre sein. Durch die Erfindung wird dabei der Fluoreszenzfarbstoff sehr effektiv ausgenutzt und kann dann materialsparend in nur noch sehr dünnen Schichten verwendet werden. Weitere Anwendungsgebiete sind Messanordnungen, in denen die Fluoreszenz in Transmission gemessen werden soll, beispielsweise in der Qualitätskontrolle. Das verdeutlicht den wesentlich flexibleren Einsatz der erfindungsgemäßen Anordnung im Vergleich zu bekannten Lösungen wie sie etwa in den Schriften WO 98 / 53304 und US 6,552,794 B2 offenbart werden.

Oftmals werden Mikroarrays gleichzeitig oder gleich nacheinander mit zwei unterschiedlichen Wellenlängen angeregt. Ein weiterer wesentlicher Vorteil der erfindungsgemäßen Anordnung liegt in der Möglichkeit, das Interferenzschichtsystem an derartige Anforderungen anzupassen. Dazu ist erfindungsgemäß vorgesehen, das Interferenzschichtsystem mit einem geeigneten Design derart zu gestalten, dass es bei zwei oder mehreren diskreten Anregungswellenlängen gleichzeitig große elektrische Feldamplituden aufweist, so dass bei zumindest zwei Wellenlängen eine verstärkte Fluoreszenz auftritt. Dementsprechend kann eine erfindungsgemäße Anordnung für Fluoreszenzanregungen bei mehreren Wellenlängen verwendet werden. Eine solche gleichzeitige Anpassung an zwei oder mehr Wellenlängen ist mit den bekannten Metall/Dielektrikum Beschichtungen (etwa gemäß der WO 98 / 53304) nicht möglich.

Beispielsweise kann die fluoreszenzverstärkende Beschichtung vorteilhaft so ausgelegt werden, daß sie Angregungslicht mit einer Anregungswellenlänge um 535 Nanometer und um 635 Nanometer im Bereich des fluoreszenzfähigen Materials, also im Bereich der Oberfläche, dort wo in vertikaler Richtung das fluoreszenzfähige Material angeordnet ist oder angeordnet wird, verstärkt. Diese Wellenlängen werden vielfach für Fluoreszenzmessungen an organischen, insbesondere biologischen Proben verwendet. Insbesondere kann das Interferenzschichtsystem so ausgelegt werden, daß es bei diesen beiden Wellenlängen verstärkt.

Ein weiterer Vorteil ist, dass neben dem mehreren Maxima des Quadrats der Feldamplitude auch ein oder mehrere ausgeprägte Minima der Intensität im Bereich des fluoreszenzfähigen Materials auftreten. Dies ist besonders vorteilhaft, um unerwünschte Hintergrundsignale abzuschwächen und/oder eine besonders gute selektive Anregung des fluoreszenzfähigen Materials zu erreichen. Insbesondere auch bei der Verstärkung bei mehr als einer Wellenlänge, durch Ausbildung von Maxima der Feldamplituden-Quadrate im Bereich der Oberfläche der fluoreszenzverstärkenden Beschichtung und/oder im fluoreszenzfähigen Material kommt es neben den Maxima auch zu einem Minimum bei einer dazwischenliegenden Wellenlänge.

Um ein besonders gutes Signal-Hintergrund-Verhältnis zu erreichen, ist gemäß einer Weiterbildung der Erfindung dabei vorgesehen, daß das Interferenzschichtsystem derart ausgebildet ist, daß das Verhältnis der Amplitudenquadrate eines Maximums des Amplitudenquadrats bei einer ersten Wellenlänge zu einem benachbarten Minimum bei einer zweiten Wellenlänge zumindest 5 zu 1, bevorzugt zumindest 10 zu 1, besonders bevorzugt sogar zumindest 50 zu 1 beträgt. Damit kann unter anderem Fluoreszenzlicht, welches durch Verunreinigungen ansonsten bei der Wellenlänge des Minimums angeregt werden würde, sehr wirkungsvoll unterdrückt werden. Das Verhältnis der Intensitäten wird dabei unter anderem von der Anzahl der Einzelschichten des Interferenzschichtsystems bestimmt.

Da weiterhin die Wellenlänge von Fluoreszenzlicht vergleichsweise dicht an der Anregungswellenlänge liegt, ist außerdem vorgesehen , daß das Intensitätsmaximum des Amplitudenquadrats im fluoreszenzfähigen Material, beziehungsweise im Bereich nahe oder auf der Oberfläche der fluoreszenzverstärkenden Beschichtung eine Halbwertsbreite von höchstens 120 Nanometern, bevorzugt höchstens 100 Nanometern aufweist.

Es gibt eine große Vielfalt im Bereich der Auswahl der dielektrischen Materialien für die hoch- und niedrigbrechenden Schichten des Interferenzschichtsystems. Diese sollten jedoch für Anwendungsgebiete in der Fluoreszenzmessung so gewählt werden, dass sie nicht im Emissionsspektrum des zu analysierenden Materials fluoreszieren.

In der Regel, bestehen die Designs vorzugsweise aus jeweils einem hochbrechenden und einem niedrigbrechenden dielektrischen Material. Je größer dabei der Brechungsindexunterschied der beiden Schichtmaterialien ist, desto weniger Schichten werden für das Design der fluoreszenzverstärkenden Beschichtung bei gleicher Performance benötigt. Vorzugsweise werden hochbrechende Oxide, beispielsweise Al₂O₃, TiO₂, Ta₂O₅, Nb₂O₅, HfO₂ oder ZrO₂, oder hochbrechende Nitride und niedrigbrechende Oxide, beispielsweise SiO₂, oder niedrigbrechende Nitride verwendet.

Schichtdesigns mit hochbrechenden Schichten aus verschiedenen hochbrechenden Materialien und/oder niedrigbrechende Schichten aus verschiedenen niedrigbrechenden Materialien können jedoch ebenfalls zur Anwendung kommen.

Die Auswahl der Substratmaterialien ist sehr umfangreich und wird sich im wesentlichen nach dem Einsatz der erfindungsgemäßen Anordnung richten. Durch die reflektiven Eigenschaften der Beschichtung im Bereich des Anregungslichtes dringt dieses nicht in das Substrat ein. Das Substrat kann daher nicht angeregt werden. Insofern wird das Spektrum der möglichen Substratmaterialien stark erweitert. Für Anwendungen in der Fluoreszenzmessung, in denen die Anordnung als Probenträger dient, ist das Substrat vorzugsweise ein Glas, eine Glaskeramik oder ein Kunststoff. Die erfindungsgemäße Anordnung erlaubt auch die Verwendung fluoreszierender Substrate, da diese die Messung nicht mehr negativ beeinflussen können.

Die erfindungsgemäße Anordnung ermöglicht eine hochgenaue Fluoreszenzdetektion, so dass diese vorzugsweise zur Analyse in der Bio-Chip-Technologie eingesetzt werden kann. In diesem Fall umfasst das auf der Beschichtung befindliche fluoreszenzfähige Material eine organische Haftschicht und zu untersuchendes flureszenzfähiges biologisches Material.

Die erfindungsgemäße Anordnung ist vorzugsweise als Probenträger, als sogenanntes Mikro-Array, mit zu anlysierendem biologischem Material wie Zellen, Nukleinsäuren, Proteine, Peptide und Kohlen-Wasserstoffe in der Fluoreszenzspektroskopie geeignet.

Die erfindungsgemäße Anordnung ist jedoch nicht auf diese Anwendungsgebiete beschränkt, sondern kann überall dort Anwendung finden, wo eine Verstärkung von Fluoreszenz wünschenswert ist. So ist ebenfalls deren Verwendung als Beleuchtungskörper möglich. Befindet sich die Anregungslichtquelle innerhalb des von innen beschichteten Substrats, welches als Beleuchtungskörper ausgebildet ist, ist die fluoreszenzverstärkende Beschichtung und das Substrat für das Emissionslicht durchlässig zu gestalten. Eine solche Transparenz im spektralen Bereich der Emission ist nicht mit bekannten Metall/Dielektrikum Beschichtungen möglich.

Bei der Verwendung der erfindungsgemäßen Anordnung zur Analyse chemischer und/oder biologischer Substanzen oder anderen Fluoreszenzanalysen oder in Reinigungsprozeduren zur Wiederverwendbarkeit ist es vorteilhaft dass sie gegenüber Reagenzien bei der Analyse und/oder dem Reinigungsprozess beständig ist. Dies gilt insbesondere für die fluoreszenzverstärkende Beschichtung. Ein typisches Beispiel ist eine Hybridisierung von DNA-Strängen. Es hat sich gezeigt, daß verschiedene Schichtsysteme von den bei der Hybridisierung verwendeten Chemikalien stark angegriffen werden. Eine vorteilhafte Weiterbildung der Erfindung sieht demgemäß eine Anordnung mit einer reinigungsbeständigen und/oder reaktionsbeständigen fluoreszenzverstärkenden Beschichtung vor.

Dabei wurde gefunden, daß Schichtsysteme mit Lagen, welche durch plasmaionen-unterstütztes Aufdampfen hergestellt wurden, oft chemisch beständiger sind, als durch Sputtern hergestellte Schichten.

Die Erfindung wird im folgenden an Hand von Ausführungsbeispielen näher beschrieben. Es zeigen dazu
- Fig. 1: die schematische Darstellung eines Mikro-Arrays,
- Fig. 2A, 2B: das Reflexionsspektrum und das Quadrat der Feldstärke an der Oberfläche der fluoreszenzverstärkenden Beschichtung gemäß eines Ausführungsbeispiels der Erfindung,
- Fig. 3A und 3B: zum Vergleich das Reflexionsspektrum und das Quadrat der Feldstärke an der Oberfläche eines Schichtsystems Glas/Metall/SiO₂,
- Fig. 4A und 4B: das Reflexionsspektrum und das Quadrat der Feldstärke an der Oberfläche der fluoreszenzverstärkenden Beschichtung gemäß eines Ausführungsbeispiels mit 52 Einzelschichten im Schichtpaket der fluoreszenzverstärkenden Beschichtung,
- Fig. 5A und 5B: einen Vergleich der Signalstärke von Fluoreszenzsignalen bei verschiedenen Fluoreszenzkanälen unter Verwendung herkömmlicher und erfindungsgemäß ausgestalteter Probenträger für mehrere Gene,
- Fig. 6A und 6B: einen vergleich des Signal-Hintergrund-Verhältnisses für die in Fig. 5A und 5B gezeigten Signale,
- Fig. 7A und 7B: Verhältnisse der Signalhöhen von Fluoreszenzsignalen an Cy5- und Cy3-Molekülen, gemessen an unbeschichteten und erfindungsgemäßen Probenträgern, wobei die Verhältnisse in Fig. 7B normiert auf das Signalverhältnis von unbeschichteten Probenträgern gezeigt sind,
- Fig. 8A bis 8C: Vergleiche der Meßwerte von Fluoreszenzsignalen, Hintergrundsignalen und des Signal-Hintergrund-Verhältnisses für einen unbeschichteten Probenträger, einen erfindungsgemäßen Probenträger und einen Probenträger mit Glas / Metall / SiO₂ -Schichtsystems,
- Fig. 9A und 9B: Rasterelektronische Aufnahmen eines Interferenzschichtsystems gemäß einer Weiterbildung der Erfindung mit durch plasmaionen-unterstütztem Aufdampfen abgeschiedenen Lagen vor und nach einer Reinigung,
- Fig 10A und 10B: zum Vergleich Rasterelektronische Aufnahmen eines durch Aufdampfen ohne plasmaionenunterstützte Abscheidung hergestellten Interferenzschichtsystems vor und nach einer Reinigung, und
- Fig. 11: eine weitere Ausführungsform der Erfindung in Form einer Fluoreszenzröhre.

Die beispielhafte Ausführungsform betrifft ein Mikro-Array, beispielsweise für DNA-Analysen. Es wird unter Anwendung der Fluoreszenzspektroskopie die lokal aufgelöste Photolumineszenz durch 2-dimensionales Abrastern der typischerweise 2,5 cm * 7,5 cm großen Slides mit einem Laserscanner gemessen. Die Anregung erfolgt beispielsweise mit einem Laserstrahl der Anregungswellenlänge λ_{A} = 532 nm.

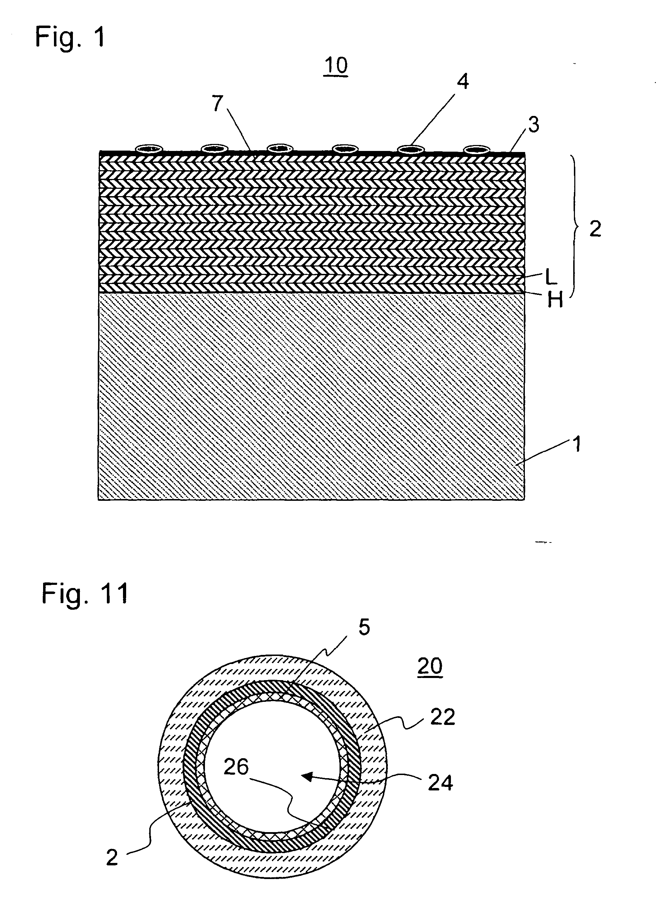

Fig. 1 zeigt einen schematischen, unmaßstäblichen Aufbau eines zur DNA-Analyse verwendeten, als Ganzes mit 10 bezeichneten Mikro-Arrays. Das Mikro-Array 10 besteht aus einem Substrat (1) aus Glas, einem Interferenzschichtsystem (2), welches als fluoreszenzverstärkende Beschichtung wirkt, und fluoreszenzfähigem Material, welches auf der Oberfläche 7 der fluoreszenzverstärkenden Beschichtung, beziehungsweise dem Interferenzschichtsystem 2 aufgebracht ist und welches typischerweise aus einer ca. 2 nm dicken organischen Haftschicht (3) und punktförmig aufgebrachten ca. 40 nm dickem DNA-Halbstrang-Material mit angehängtem Fluoreszenzmolekül(4), beispielsweise Cy3, besteht. Ein nach Anregung fluoreszierender "DNA-Spot" gilt dabei als Nachweis für eine erfolgreiche DNA-Anbindung. Das emittierte Licht hat typischerweise eine Emissionswellenlänge λ_{E} = 580 nm. Eine hohe Detektionsempfindlichkeit ist Voraussetzung für eine erfolgreiche Analyse.

Die Detektionsempfindlichkeit kann mit einem speziellen Design des Interferenzschichtsystems (2), welches das Anregungslicht der Wellenlänge λ_{A}= 532 nm reflektiert und ein Maximum der elektrische Feldamplitude der stehenden Welle an der Grenzfläche des Interferenzschichtsystems (2) zum fluoreszenzfähigen Material aufweist, wesentlich erhöht werden.

Diese Bedingung erfüllt beispielsweise ein in Fig. 1 dargestelltes Interferenzschichtsystem (2) mit dem Design (HL)^{B}, bestehend aus acht Schichtpaaren aus jeweils einer hochbrechenden Schicht (H) und einer niedrigbrechenden Schicht (L), wobei sich die erste hochbrechende Schicht (H) auf dem Substrat (1) befindet und die letzte niedrigbrechende Schicht (L) die Grenzfläche zum fluoreszenzfähigem Material bildet.

Die hochbrechende Schicht (H) besteht aus TiO₂ mit einem Brechungsindex von ca. 2,4 und die niedrigbrechende Schicht (L) aus SiO₂ mit einem Brechungsindex von ca. 1,5. Die optischen Schichtdicken der hoch- und niedrigbrechenden Schichten (H,L) entsprechen der Lambda-Viertelwellenlänge des Anregungslichtes mit der Wellenlänge λ_{A} = 532 nm, so dass sich für die niedrigbrechende Schicht (L) aus SiO₂ eine Schichtdicke von 88,7 nm ergibt und für die hochbrechende Schicht (H) aus TiO₂ eine Schichtdicke von 55,4 nm. Die Reflexion dieses Designs bei λ_{A}= 532 nm beträgt über 98 %.

Durch die Auswahl des Abfolge und der Schichtdicken der hoch-und niedrigbrechenden Einzelschichten des Interferenzschichtsystems 2 wird dann eine derartige Phasenbeziehung des Anregungslichts bewirkt, dass es unmittelbar an der Oberfläche oder im Bereich einer halben Wellenlänge, bevorzugt einer Viertelwellenlänge oberhalb der Oberfläche zwischen einfallendem und reflektierten Anregungslichts, dort wo in vertikaler Richtung das fluoreszenzfähige Material vorhanden ist, zur konstruktiven Interferenz kommt und sich eine maximale elektrische Feldstärke im Bereich des aufgebrachten fluoreszierenden Materials ausbildet.

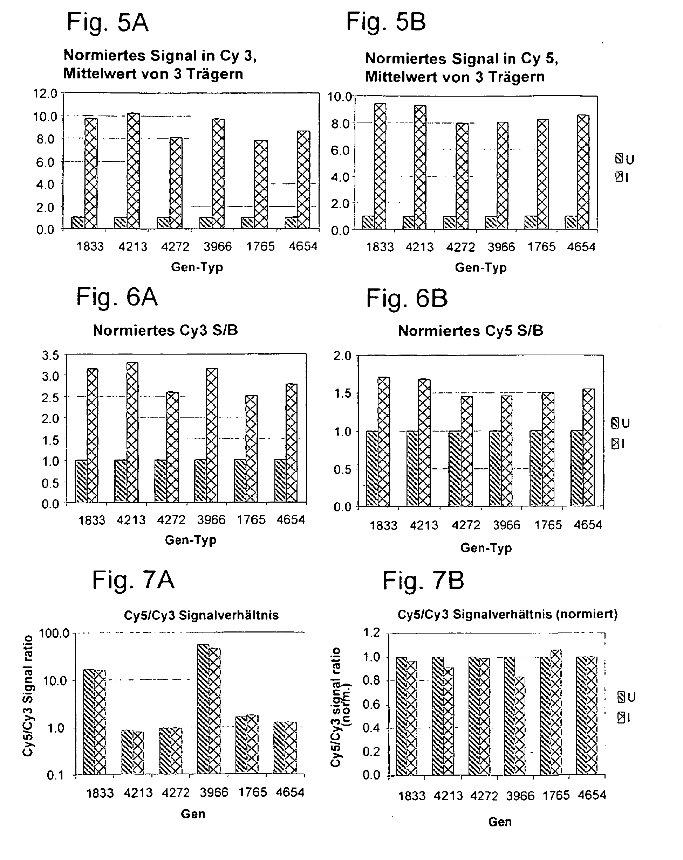

Mit diesem Interferenzschichtsystem als fluoreszenzverstärkende Beschichtung ist eine Erhöhung des Fluoreszenzsignals gegenüber unbeschichteten Substraten um den Faktor ≥ 10 möglich und experimentell nachgewiesen worden, siehe dazu auch die weiter unten diskutierten Fig. 5A, 5B, 6A, 6B.

Das fluoreszenzfähige Material kann auch erst nachträglich auf der Oberfläche 7 des Interferenzschichtsystems 2 aufgebracht werden, etwa wenn auf einem Probenträger das DNA-Halbstrang-Material mit angehängtem Fluoreszenzmolekül 4 erst für die Untersuchung aufgetragen wird, um ein Mikro-Array zu bilden. Auch bei dieser Variante ist das Interferenzschichtsystem so ausgebildet, daß die Oberfläche 7 der fluoreszenzverstärkenden Beschichtung 2 im Bereich des Maximums der elektrischen Feldamplitude, insbesondere des Quadrats dieser Amplitude der sich bei Bestrahlung mit dem Anregungslicht ausbildenden stehenden Welle mit der Anregungswellenlänge λ_{A} angeordnet ist. Dabei kann insbesondere auch die vorgesehene Schichtdicke des fluoreszenzfähgen Materials berücksichtigt werden. Beispielsweise kann die Oberfläche 7 der fluoreszenzverstärkenden Beschichtung im Bereich bis höchstens 50 Nanometern unterhalb des Maximums des Quadrats der Feldamplitude angeordnet sein.

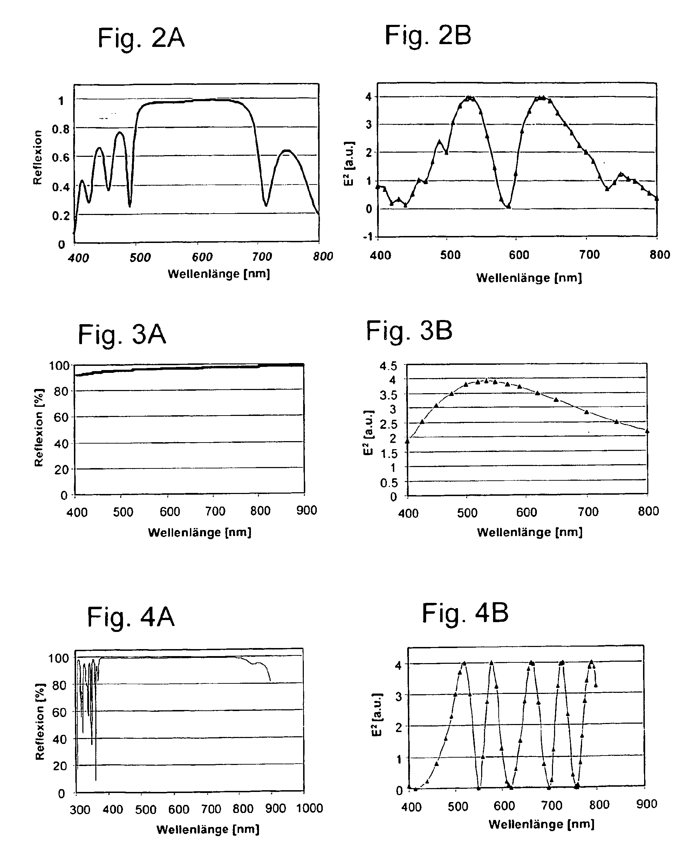

In den Fig. 2A und 2B sind simulierte Verläufe der Reflexion und des im folgenden auch als E² bezeichneten Quadrats der Amplitude auf der Oberfläche 7 der fluoreszenzverstärkenden Beschichtung mit dem Interferenzschichtsystem 2 als Funktion der Wellenlänge des Anregungslichts dargestellt. Der Schichtaufbau des Interferenzschichtsystems entspricht dabei nicht dem der in Fig. 1 dargestellten Anordnung mit insgesamt acht Einzelschichten. Das hier verwendete Schichtsystem wurde speziell so konstruiert, dass es bei den in der Praxis typischer Weise verwendeten Wellenlängen 532 nm und 635 nm die Fluoreszenz verstärkt.

Zum Vergleich dazu sind in den Fig. 3A und 3B außerdem simulierte Verläufe von Reflexion und E² für ein Glas /Metall / SiO₂ -Schichtsystem dargestellt. Der Aufbau eines solchen Glas / Metall / SiO₂ - Schichtsystems entspricht prinzipiell einem optischen Substrat wie es in der WO 98/53304 A1 offenbart wird. Als Schichtdicke der SiO₂-Schicht wurde ein ungerades Vielfaches einer Wellenlänge von 532 Nanometern angenommen.

Die metallisch reflektierende Schicht eines Glas / Metall /SiO₂ - Schichtsystems reflektiert das Licht nahezu unabhängig von der Wellenlänge (Fig. 3A). Zwar reflektiert auch ein erfindungsgemäßes Interferenzschichtsystem 2 das Licht über einen breiten Wellenlängenbereich von etwa 500 bis 700 Nanometern (Fig. 2A), allerdings zeigen sich sehr deutliche Unterschiede im spektralen Verlauf von E² auf der Oberfläche eines erfindungsgemäß beschichteten Substrats (Fig. 2B) und einem Glas / Metall / SiO₂ - Schichtsystem (Fig. 3B).

Im Falle eines Glas / Metall / SiO₂- Schichtsystems zeigt sich nur ein einzelnes breites Maximum bei 532 Nanometern Wellenlänge. Demgegenüber ergeben sich bei einer erfindungsgemäßen Anordnung zwei Maxima im sichtbaren Spektralbereich. Die Anzahl der Maxima und deren spektrale Lage können durch geeignete Auswahl der Schichtdicken und/oder der Anzahl der Einzelschichten des Interferenzschichtsystems auf die jeweilig gewünschten Wellenlängen eingestellt werden, was einem gravierenden Vorteil gegenüber einem Metall / SiO₂ System darstellt. Bei dem in Fig. 2A, 2B gezeigten Beispiel ist die fluoreszenzverstärkende Beschichtung insbesondere so ausgebildet, daß sie Anregungslicht mit einer Wellenlänge von 535 Nanometern und 635 Nanometern verstärkt. Beide Wellenlängen werden verbreitet für Fluoreszenzanalysen an DNA-Molekülen eingesetzt. Eine erfindungsgemäße Anordnung kann daher sehr einfach für mehrere genau festlegbare Wellenlängen des Anregungslichts zugeschnitten werden.

Die Maxima des Amplitudenquadrats des Anregungslichts im fluoreszenzfähigen Material, oder im Bereich nahe oder auf der Oberfläche der fluoreszenzverstärkenden Beschichtung weisen bei dem in Fig. 2B gezeigten Beispiel außerdem eine Halbwertsbreite von unter 100 Nanometern auf und sind damit wesentlich schmaler als das Maximum, welches bei einem Glas/Metall/SiO₂-Schichtsystem auftritt.

Anhand der Fig. 2A, 2B und 3A, 3B wird insbesondere auch deutlich, daß bei einer erfindungsgemäßen Anordnung mit aufgebrachtem oder aufbringbarem fluoreszenzfähigem Material nicht einfach eine metallisch reflektierende Schicht durch einen dielektrischen Spiegel ersetzt ist. Rein visuell erscheint das Interferenzschichtsystem zwar ebenfalls wie ein Spiegel, ebenso wichtig wie die reflektierende Eigenschaft des Interferenzschichtsystems 2 ist aber die Phasenbeziehung des ein- und ausfallenden Strahls auf der Oberfläche, beziehungsweise im Bereich des fluoreszenafähigen Materials. Erst die Phasenbeziehung legt die spektrale Lage der Maxima und Minima der elektrischen Feldstärke fest und bestimmt bei einem spektral breit reflektierenden Design die exakten (Anregungs-)Wellenlängen bei denen nur die Fluoreszenz verstärkt oder reduziert wird.

Das Interferenzschichtsystem ist außerdem so ausgebildet, daß die Phasenbeziehung des Anregungslichts entlang der Oberfläche im Bereich des fluoreszenzfähigen Materials gleich bleibt. Damit wird vermieden, daß sich entlang der Oberfläche im Bereich des fluoreszenzfähigen Materials neben Intensitätsmaxima auch Intensitätsminima ergeben. Dementsprechend wird lateral an jeder Stelle der Oberfläche, an welcher fluoreszenzfähiges Material angeordnet ist, im wesentlichen die gleiche Verstärkung, beziehungsweise auch der gleiche spektrale Verlauf von E², wie er in Fig. 2B beispielhaft gezeigt ist, erhalten.

Ein weiterer Unterschied einer erfindungsgemäßen Anordnung zu einer metallisch reflektierenden Schicht mit einer darauf abgeschiedenen SiO₂-Schicht ist, daß es neben den Maxima bei 635 Nanometern und 535 Manometern auch ein deutliches, zwischen den Maxima liegendes Minimum der Intensität gibt. Dies hat den Vorteil, dass bei breitbandiger Anregung, wie insbesondere etwa bei vielfach eingesetzten Weißlicht-Interferometern weniger unerwünschte Hintergrundfluoreszenz angeregt wird. Gibt es zum Beispiel Oberflächenverschmutzungen, die unter Anregung bei 580 nm Fluoreszenzlicht von 600 nm Wellenlänge abgeben -dies ist unter anderem bei organischem Material möglich-, dann würde diese unerwünschte Fremdfluoreszenz bei einem Glas / Metall / SiO₂ Aufbau mit einer Charakteristik entsprechend den Fig. 3A, 3B deutlich mehr verstärkt als bei einem erfindungsgemäßen dielektrischen Aufbau.

Dieses Verhalten folgt unmittelbar aus der ausgeprägteren E² -Verteilung an der Oberfläche des Interferenzschichtsystems 2 oder im darauf angeordneten fluoreszenzfähigen Material. Um solche Hintergrundsignale zu minimieren, ist es dabei vorteilhaft, wenn das Verhältnis der Amplitudenquadrate eines Maximums des Amplitudenquadrats bei einer ersten Wellenlänge zu einem benachbarten Minimum bei einer zweiten Wellenlänge zumindest 5 zu 1, bevorzugt zumindest 10 zu 1, besonders bevorzugt sogar zumindest 50 zu 1 beträgt. Bei dem in Fig. 2B gezeigten Beispiel beträgt dieses Verhältnis für jedes der Maxima mehr als 50 zu 1.

In den Fig. 4A und 4B ist die Charakteristik eines weiteren Ausführungsbeispiels der Erfindung dargestellt. Fig 4A zeigt das Reflexionsspektrum und Fig. 4B das Quadrat der Feldstärke an der Oberfläche der fluoreszenzverstärkenden Beschichtung. Bei diesem Ausführungsbeispiel umfaßt das Interferenzschichtsystem 52 Schichten aus abwechselnd hoch-und niedrigbrechenden Materialien. Bei diesem Ausführungsbeispiel zeigt sich, daß dieses Interferenzschichtsystem eine über den gesamten sichtbaren Spektralbereich im wesentlichen gleichförmig hohe Reflexion aufweist. Insbesondere aber sind aufgrund der höheren Schichtanzahl nun sogar 5 Maxima des Quadrats der Feldstärke an der Oberfläche des Interferenzschichtsystems 2 im Bereich des sichtbaren Spektrums vorhanden.

Die Fig. 5A, 5B, 6A, 6B zeigen Meßergebnisse für die Fluoreszenzsignale von Genen in Form von Balkendiagrammen. Dabei stellen die mit "U" bezeichneten Balken jeweils die an unbeschichteten, herkömmlichen Probenträgern und die mit "I" bezeichneten Balken die an erfindungsgemäß ausgestalteten Probenträgern gewonnenen Meßwerte dar. In jedem der Balkendiagramme sind die Meßwerte an sechs verschiedenen Gen-Typen dargestellt. Fig. 5A zeigt die Messungen am Fluoreszenzmolekül Cy3 bei 535 Nanometern Wellenlänge und Fig. 5B die Messungen am Fluoreszenzmolekül Cy5 bei 635 Nanometern Wellenlänge des Anregungslichts. In den Fig. 6A und 6B ist das Signal-Hintergrund-Verhältnis der in Fig. 5A, beziehungsweise 5B gezeigten Signale dargestellt. Wie anhand der Fig. 5A und 5B zu erkennen ist, sind die Signale von erfindungsgemäßen Probenträgern mit Interferenzschichtsystem 2 jeweils um mindestens einen Faktor 8 höher, als von herkömmlichen Probenträgern.

Insbesondere ist auch das Signal/Hintergrund-Verhältnis wesentlich besser, als bei herkömmlichen Probenträgern, wie anhand der Fig. 6A und 6B dargestellt ist. Bei der Fluoreszenz bei 635 Nanometern Anregung (Fig. 6B) ist das Signal-Hintergrundverhältnis um zumindest etwa einen Faktor 1,5 und bei 535 Nanometern sogar zumindest einen Faktor 2,5 größer, verglichen mit unbeschichteten Probenträgern. Zieht man das Hintergrundsignal von den in den Fig. 5A und 5B gezeigten Signalen ab, so erhält man eine Verstärkung des Meßsignals, welche bei erfindungsgemäßen Probenträgern jeweils um mindestens einen Faktor 10 höher ist.

Fig. 7A und 7B zeigen Verhältnisse der Signalhöhen von Fluoreszenzsignalen an Cy5- und Cy3-Molekülen für verschiedene Gene, gemessen an unbeschichteten und erfindungsgemäßen Probenträgern, wobei die Verhältnisse in Fig. 7B normiert auf das Signalverhältnis von unbeschichteten Probenträgern gezeigt sind. Für die Anwendung ist das Verhältnis der Fluoreszenz unter Anregung bei 535 nm (Cy3-Moleküle) zur Anregung bei 635 nm (Cy5-Moleküle) wichtig. Dieses in Fig. 7A und 7B gezeigte Verhältnis sollte möglichst unverändert bleiben. Zwar schwankt das Verhältnis stark von Gen zu Gen (Fig. 7A), allerdings in nahezu gleichem Maße bei erfindungsgemäßen und unbeschichteten Probenträgern. Auch wenn die Verhältnisse auf die an unbeschichteten Probenträgern festgestellten Signalverhältnisse normiert werden, zeigen sich nur geringe Abweichungen.

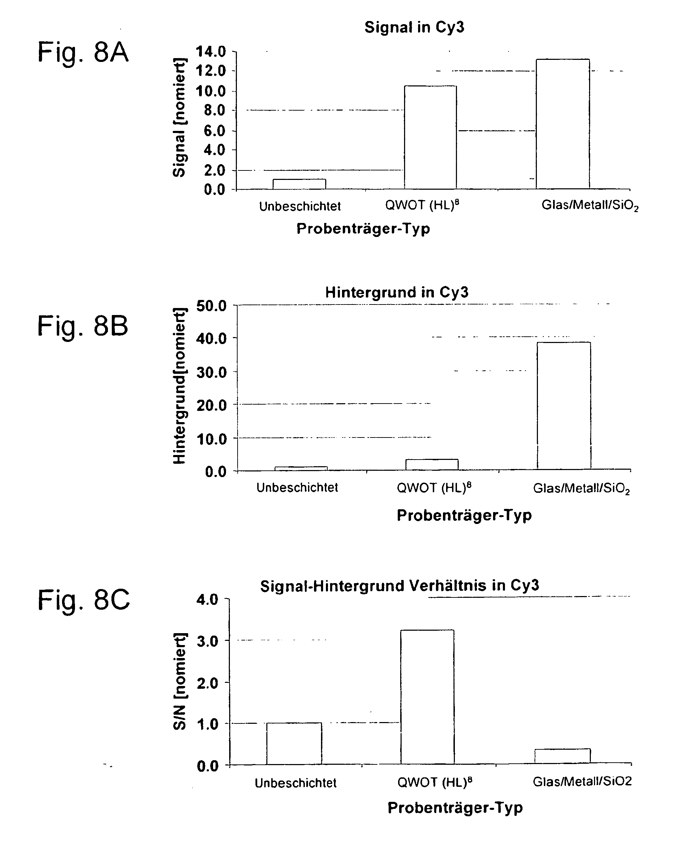

Die Fig. 8A bis 8C zeigen Vergleiche der Meßwerte von Fluoreszenzsignalen (Fig. 8A), Hintergrundsignalen (Fig. 8B) und des Signal-Hintergrund-Verhältnisses (Fig. 8C) für einen unbeschichteten Probenträger (jeweils links in den Balkendiagrammen), einen erfindungsgemäßen Probenträger (QWOT (HL)^{B}) und einen Probenträger mit Glas / Metall /SiO₂ - Schichtsystems (jeweils rechts in den Diagrammen). Gemessen wurde dabei die Fluoreszenz eines Cy3-Fluoreszenzfarbstoffs bei Anregung mit Licht einer Wellenlänge von 535 Nanometern. Der erfindungsgemäße Probenträger entspricht einem Mikro-Array mit achtlagigem Interferenzschichtsystem, wie er in Fig. 1 dargestellt ist. Anhand der in den Fig. 8A bis 8C aufgetragenen Meßwerte zeigt sich, daß ein Probenträger mit einem Glassubstrat, metallisch reflektierender Schicht und einer SiO₂-Abstandhalterschicht zwar die höchsten Signale liefert (Fig. 8A), jedoch deutlich mehr Hintergrundsignal (Fig. 8B) und damit ein schlechteres Signal-Rausch-Verhältnis ergibt, als ein erfindungsgemäßes Mikroarray 10. Sogar der unbeschichtete Träger zeigte ein besseres Signal-Rausch-Verhältnis.

Bei der Verwendung einer erfindungsgemäßen Anordnung als Probenträger oder Mikroarray zeigt sich, daß ein Interferenzschichtsystem sehr vorteilhafte optische Eigenschaften gegenüber bisher bekannten Anordnungen aufweist. Allerdings sind die einzelnen Lagen sehr dünn und können unter Umständen bei Reinigungsprozeduren angegriffen werden. Es können aber reinigungsbeständige und/oder reaktionsbeständige fluoreszenzverstärkenden Beschichtungen mit einem besonderen Abschiedeverfahren, dem plasmaionenunterstützten Aufdampfen hergestellt werden.

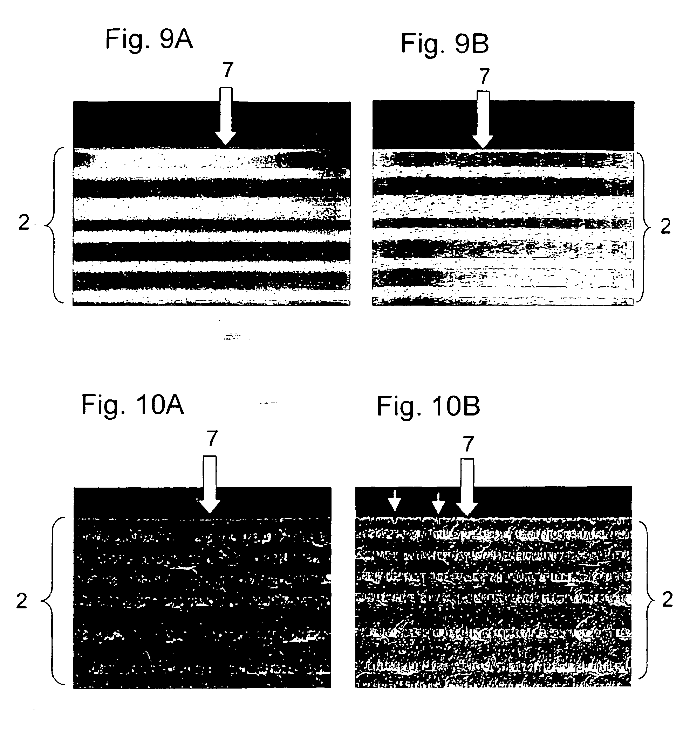

Fig. 9A und 9B zeigen rasterelektronische Aufnahmen eines Interferenzschichtsystems 2 gemäß einer Weiterbildung der Erfindung derartig abgeschiedenen Lagen vor (Fig. 9A) und nach (Fig. 9B) einer Reinigungsprozedur, wie sie für Probenträger typischerweise vorgenommen wird. Auch nach der Reinigung zeigen sich keine wesentlichen Veränderungen des Schichtaufbaus.

In den Fig. 10A und 10B sind zum Vergleich Rasterelektronische Aufnahmen eines durch Aufdampfen ohne plasmaionen-unterstützte Abscheidung hergestellten Interferenzschichtsystems vor und nach einer solchen Reinigung dargestellt. Nach dem Reinigen zeigen sich in der Oberfläche Gräben, von denen einige in Fig. 10B mit Pfeilen markiert sind. Nach wiederholten Reinigungszyklen kann es dadurch zu einem starken Angriff des Schichtsystems kommen. Auch bei gesputterten Schichten zeigen sich derartige Defekte. Ein Angriff zeigt sich bei gesputterten Schichten auch bei einer auf dem Probenträger durchgeführten Hybridisierungsreaktion. Dabei kann es sogar zu einer Auflösung der obersten Schicht kommen.

Neben einer Abscheidung der Schichten mittels plasmaionen-unterstütztem Aufdampfen sind auch noch weitere Maßnahmen möglich, um eine gegenüber Reagenzien bei der Analyse und/oder einem Reinigungsprozess beständige fluoreszenzverstärkende Beschichtung zu erhalten. Beispielsweise kann eine geeignete Barrierebeschichtung auf dem Interferenzschichtsystem aufgebracht sein oder selbst einen Bestandteil des Interferenzschichtsystems bilden. So kann die oberste Lage des Interferenzschichtsystems beispielsweise eine reaktionsstabile Kunststoffschicht sein, um eine gegenüber Reagenzien bei der Analyse und/oder einem Reinigungsprozess beständige fluoreszenzverstärkende Beschichtung zu erhalten.

In Fig. 11 ist eine weitere Ausführungsform der Erfindung dargestellt. Fig. 11 zeigt im Querschnitt eine Fluoreszenzröhre 20 mit einer Glasröhre 22 als Substrat. Der Innenraum 24 der Glasröhre 22 bildet dabei den Gasentladungsraum. Auf der Innenwandung 24 der Glasröhre ist wieder eine fluoreszenzverstärkende Beschichtung mit einem Interferenzschichtsystem 2 aufgebracht, dessen einzelne, hier konzentrisch zur Zylinderachse der Glasröhre 22 angeordnete hoch- und niedrigbrechende Lagen der Einfachheit halber nicht dargestellt sind. Auf dem Interferenzschichtsystem 2 ist eine fluoreszenzfähige Beschichtung 5 aufgebracht. Auch hier sind wie bei dem in Fig. 1 dargestellten Beispiel das Interferenzschichtsystem 2 und die Beschichtung 5 so ausgebildet, daß es zumindest das Anregungslicht reflektiert und das fluoreszenzfähige Material auf der Beschichtung im Bereich des Maximums der elektrischen Feldamplitude, insbesondere des Maximums von E² der sich bei Bestrahlung mit dem Anregungslicht ausbildenden stehenden Welle mit der Anregungswellenlänge λ_{A} angeordnet ist. Das Schichtsystem 2 wird hier im allgemeinen hinsichtlich seiner Schichtdicken anders auszulegen sein, als bei dem in Fig. 1 gezeigten Beispiel, da das Plasma einer Gasentladungsröhre typischerweise eine oder mehrere intensive Linien im ultravioletten Spektralbereich aufweist. Sind mehrere Linien vorhanden, so kann deren Intensität, wie etwa anhand von Fig. 2B und Fig. 4B verdeutlicht wurde, gezielt innerhalb der fluoreszenzfähigen Schicht 5 verstärkt werden. Damit das in der Schicht 5 erzeugte Fluoreszenzlicht austreten kann, ist bei diesem Ausführungsbeispiel das Interferenzschichtsystem 2 außerdem als optischer Filter ausgebildet, welcher Licht im Bereich der Emissionswellenlänge λ_{E} transmittiert.

Es ist dem Fachmann ersichtlich, dass die Erfindung nicht auf die vorstehend beschriebenen Ausführungsformen beschränkt ist, sondern vielmehr innerhalb des durch die Ansprüche definierten Schutzbereichs in vielfältiger Weise variiert werden kann. Insbesondere können die Merkmale der einzelnen beispielhaften Ausführungsformen auch miteinander kombiniert werden. Die Anwendung der Erfindung ist auch ausdrücklich nicht auf die Fluoreszenzspektroskopie zur Analyse von Mikro-Arrays beschränkt, sondern ebenfalls auch überall dort anwendbar, wo Fluoreszenz dünner Schichten zu messen ist, beispielsweise auch in Bereichen der Qualitätskontrolle.

## Patentansprüche

1. Anordnung zur Fluoreszenzverstärkung, welche
- ein Substrat (1),
- eine auf das Substrat aufgebrachte fluoreszenzverstärkende Beschichtung und
- ein auf der Beschichtung befindliches fluoreszenzfähiges Material, welches bei Bestrahlung mit Anregungslicht einer Anregungswellenlänge λ_{A} Licht im Emissionswellenlängenbereich λ_{E} emittiert, umfasst, wobei
die fluoreszenzverstärkende Beschichtung ein zumindest das Anregungslicht reflektierendes Interferenzschichtsystem (2) aus hoch- und niedrigbrechenden dielektrischen Schichten umfasst, und das fluoreszenzfähige Material auf der Beschichtung im Bereich des Maximums der elektrischen Feldamplitude der sich bei Bestrahlung mit dem Anregungslicht ausbildenden stehenden Welle mit der Anregungswellenlänge λ_{A} angeordnet ist,
**dadurch gekennzeichnet, daß** die
fluoreszenzverstärkende Beschichtung Maxima des Quadrats der Feldamplitude bei mehreren Wellenlängen im sichtbaren Spektralbereich an der Oberfläche der fluoreszenzverstärkenden Beschichtung aufweist und das Interferenzschichtsystem derart ausgebildet ist, daß das Verhältnis der Amplitudenquadrate eines Maximums des Amplitudenquadrats bei einer ersten Wellenlänge zu einem benachbarten Minimum bei einer zweiten Wellenlänge zumindest 10 zu 1, besonders bevorzugt zumindest 50 zu 1 beträgt.

2. Anordnung nach Anspruch 1, **dadurch gekennzeichnet, dass** das fluoreszenzfähige Material eine Dicke aufweist, die unter einem Viertel der Anregungswellenlänge λ_{A} liegt.

3. Anordnung gemäß einem der vorstehenden Ansprüche, **dadurch gekennzeichnet, daß** das Interferenzschichtsystem eine derartige Phasenbeziehung des Anregungslichts bewirkt, dass es unmittelbar an der Oberfläche oder im Bereich einer halben Wellenlänge, bevorzugt einer Viertelwellenlänge oberhalb der Oberfläche zwischen einfallendem und reflektierten Anregungslicht zur konstruktiven Interferenz kommt und sich eine maximale elektrische Feldstärke im Bereich des fluoreszierenden Materials ausbildet.

4. Anordnung gemäß einem der vorstehenden Ansprüche, **dadurch gekennzeichnet, daß** das Interferenzschichtsystem so ausgebildet ist, daß die Phasenbeziehung des Anregungslichts entlang der Oberfläche im Bereich des fluoreszenzfähigen Materials gleich bleibt.

5. Anordnung nach einem der vorstehenden Ansprüche, **dadurch gekennzeichnet, daß** die Oberfläche der fluoreszenzverstärkenden Beschichtung im Bereich bis höchstens 50 Nanometern unterhalb des Maximums des Quadrats der Feldamplitude der sich bei Bestrahlung mit dem Anregungslicht ausbildenden stehenden Welle mit der Anregungswellenlänge λ_{A} angeordnet ist.

6. Anordnung nach einem der vorstehenden Ansprüche , **dadurch gekennzeichnet, dass** die Beschichtung aus einem Interferenzschichtsystem (2) mit abwechselnd aufeinanderfolgenden hochbrechenden Schichten (H) und niedrigbrechenden Schichten (L) besteht, welche jeweils eine optische Schichtdicke aufweisen, die einem Viertel der Anregungswellenlänge λ_{A} entspricht.

7. Anordnung nach Anspruch 6, **dadurch gekennzeichnet, dass** diese das Design Substrat / (HL)ⁿ / fluoreszenzfähiges Material, oder Substrat / (HL)ⁿ / Oberfläche der fluoreszenzverstärkenden Beschichtung, mit n > 1, bevorzugt n ≥ 4, besonders bevorzugt n ≥ 8 aufweist.

8. Anordnung nach Anspruch 6, **dadurch gekennzeichnet, dass** diese das Design Substrat / L / (HL)ⁿ / fluoreszenzfähiges Material, oder Substrat / L / (HL)ⁿ / Oberfläche der fluoreszenz-verstärkenden Beschichtung, mit n > 1, bevorzugt n ≥ 4, besonders bevorzugt n ≥ 8 aufweist.

9. Anordnung nach Anspruch 6, **dadurch gekennzeichnet, dass** das Interferenzschichtsystem (2) zusätzlich doppelt aufeinanderfolgende hochbrechende Schichten (H) und/oder doppelt aufeinanderfolgende niedrigbrechende Schichten (L) aufweist, welche jeweils eine optische Schichtdicke aufweisen, die einem Viertel der Anregungswellenlänge λ_{A} entspricht.

10. Anordnung nach einem der vorstehenden Ansprüche, **dadurch gekennzeichnet, dass** das Interferenzschichtsystem (2) ein optischer Filter ist, welcher Licht im Bereich der Anregungswellenlänge λ_{A} reflektiert, wobei die Bandbreite λ_{A}-20nm ≤ λ_{A} ≤ λ_{A}+20nm, vorzugsweise λ_{A}-10nm ≤ λ_{A} ≤ λ_{A}+10nm beträgt und der Reflexionsgrad im Bandbereich mehr als 50 %, vorzugsweise mehr als 80 % beträgt.

11. Anordnung nach einem der vorhergehenden Ansprüche, **dadurch gekennzeichnet, dass** das Interferenzschichtsystem (2) ein optischer Filter ist, welcher Licht im Bereich der Emissionswellenlänge λ_{E} transmittiert.

12. Anordnung gemäß einem der vorstehenden Ansprüche, **dadurch gekennzeichnet, daß** die fluoreszenzverstärkende Beschichtung Anregungslicht mit einer Anregungswellenlänge um 535 Nanometern und um 635 Nanometern im Bereich des fluoreszenzfähigen Materials verstärkt.

13. Anordnung nach einem der vorhergehenden Ansprüche, **dadurch gekennzeichnet, dass** die hochbrechende dielektrische Schicht ein hochbrechendes Oxid oder Nitrid, vorzugsweise Al₂O₃, TiO₂, Ta₂O₅, Nb₂O₅, HfO₂ oder ZrO₂ umfasst.

14. Anordnung nach einem der vorhergehenden Ansprüche, **dadurch gekennzeichnet, dass** die niedrigbrechende dielektrische Schicht ein niedrigbrechendes Oxid oder Nitrid, vorzugsweise SiO₂ umfasst.

15. Anordnung nach einem der vorhergehenden Ansprüche, **dadurch gekennzeichnet, dass** das Substrat (1) ein Glas, eine Glaskeramik oder Kunststoff umfasst.

16. Anordnung nach einem der vorhergehenden Ansprüche, **dadurch gekennzeichnet, dass** das fluoreszenzfähige Material eine organische Haftschicht (3) und fluoreszenzfähiges biologisches Material (4) umfasst.

17. Anordnung nach Anspruch 16, **dadurch gekennzeichnet, dass** die organische Haftschicht Aminosilane, Aminopropylsilane, Epoxysilane oder Hydrogel-Schichten umfasst.

18. Anordnung nach Anspruch 16 oder 17, **dadurch gekennzeichnet, dass** das biologische Material Zellen, Nukleinsäuren, Proteine, Peptide und KohlenWasserstoffe umfasst.

19. Verwendung einer Anordnung nach einem der vorhergehenden Ansprüche 1 bis 18 als Mikro-Array.

20. Verwendung einer Anordnung nach einem der vorhergehenden Ansprüche 1 bis 18 als Probenträger in einem Fluoreszenzdetektionssystem.

21. Verwendung einer Anordnung nach einem der Ansprüche 1 bis 18 als Beleuchtungskörper.

22. Anordnung gemäß einem der vorstehenden Ansprüche 1 bis 18, ausgebildet als Fluoreszenzröhre.

23. Anordnung zur Fluoreszenzmessung **gekennzeichnet durch** eine Anordnung gemäß einem der vorstehenden Ansprüche 1 bis 18 als Probenträger.

24. Anordnung gemäß einem der vorstehenden Ansprüche 1 bis 18, **gekennzeichnet durch** eine gegenüber Reagenzien bei der Analyse und/oder einem Reinigungsprozess beständige fluoreszenzverstärkende Beschichtung.

25. Anordnung gemäß einem der vorstehenden Ansprüche 1 bis 18, **gekennzeichnet durch** eine fluoreszenzverstärkende Beschichtung mit **durch** plasmaionen-unterstütztem Aufdampfen hergestellten Lagen.

26. Anordnung gemäß einem der vorstehenden Ansprüche 1 bis 18, **gekennzeichnet durch** eine fluoreszenzverstärkende Beschichtung mit einem Interferenzschichtsystem, bei welchem das Intensitätsmaximum des Amplitudenquadrats des Anregungslichts im fluoreszenzfähigen Material, oder im Bereich nahe oder auf der Oberfläche der fluoreszenzverstärkenden Beschichtung eine Halbwertsbreite von höchstens 120 Nanometern, bevorzugt höchstens 100 Nanometern aufweist.

## Claims

1. An assembly for enhancing fluorescence, comprising:
- a substrate (1),
- a fluorescence-enhancing coating applied onto the substrate, and
- a fluoresceable material positioned on the coating, which, when exposed to excitation light of an excitation wavelength λ_{A}, emits light in the emission wavelength range λ_{E}, the fluorescence-enhancing coating having an interference layer system (2) comprising dielectric layers having high and low refractive indices, which reflects at least the excitation light, and the fluoresceable material being positioned on the coating in the area of the maximum of the electric field amplitude of the standing wave of the excitation wavelength λ_{A}, which developed during exposition to the excitation light, **characterised in that** the fluorescence-enhancing coating has maxima of the square of the field amplitude at several wavelengths in the visible spectral range at the surface of the fluorescence-enhancing coating and the interference layer system is designed in such a way that the ratio between the amplitude squares of a maximum of the amplitude square at a first wavelength and an adjacent minimum at a second wavelength is at least 10 to 1, especially preferably at least 50 to 1.

2. The assembly as claimed in claim 1, **characterised in that** the fluoresceable material has a thickness amounting to less than a quarter of the excitation wavelength λ_{A}.

3. The assembly as claimed in any one of the preceding claims, **characterised in that** the interference layer system causes such a phase relationship of the excitation light that a constructive interference will occur immediately at the surface or in the area of a half-wavelength, preferably a quarter-wavelength above the surface between incident and reflected excitation light, and a maximum electric field strength will develop in the area of the fluorescent material.

4. The assembly as claimed in any one of the preceding claims, **characterised in that** the interference layer system is designed in such a way that the phase relationship of the excitation light along the surface in the area of the fluoresceable material remains the same.

5. The assembly as claimed in any one of the preceding claims, **characterised in that** the surface of the fluorescence-enhancing coating is positioned in the area up to a maximum of 50 nanometres below the maximum of the square of the field amplitude of the standing wave of the excitation wavelength λ_{A}, which developed during exposure to the excitation light.

6. The assembly as claimed in any one of the preceding claims, **characterised in that** the coating consists of an interference layer system (2) having alternately successive layers (H) with a high refractive index and layers (L) with a low refractive index, each having an optical layer thickness corresponding to a quarter of the excitation wavelength λ_{A}.

7. The assembly as claimed in claim 6, **characterised in that** it has one of the following designs: substrate / (HL)ⁿ / fluoresceable material, or substrate / (HL)ⁿ / surface of the fluorescence-enhancing coating, with n > 1, preferably n ≥ 4, especially preferably n ≥ 8.

8. The assembly as claimed in claim 6, **characterised in that** it has one of the following designs: substrate / L / (HL)ⁿ / fluoresceable material, or substrate / L / (HL)ⁿ /surface of the fluorescence-enhancing coating, with n > 1, preferably n ≥ 4, especially preferably n ≥ 8.

9. The assembly as claimed in claim 6, **characterised in that** the interference layer system (2) additionally has doubly successive layers (H) with a high refractive index and/or doubly successive layers (L) with a low refractive index, each of which has an optical layer thickness corresponding to a quarter of the excitation wavelength λ_{A}.

10. The assembly as claimed in any one of the preceding claims, **characterised in that** the interference layer system (2) is an optical filter reflecting light in the range of the excitation wavelength λ_{A}, with the bandwidth being λ_{A}-20nm ≤ λ_{A} ≤ λ_{A}+20nm, preferably λ_{A}-10nm ≤ λ_{A} ≤ λ_{A}+10nm, and the reflectivity within the band range being higher than 50%, preferably higher than 80%.

11. The assembly as claimed in any one of the preceding claims, **characterised in that** the interference layer system (2) is an optical filter transmitting light in the range of the emission wavelength λ_{E}.

12. The assembly as claimed in any one of the preceding claims, **characterised in that** the fluorescence-enhancing coating enhances excitation light having an excitation wavelength around 535 nanometres and around 635 nanometres in the area of the fluoresceable material.

13. The assembly as claimed in any one of the preceding claims, **characterised in that** the dielectric layer with a high refractive index comprises an oxide or a nitride having a high refractive index, preferably Al₂O₃, TiO₂, Ta₂O₅, Nb₂O₅, HfO₂ or ZrO₂.

14. The assembly as claimed in any one of the preceding claims, **characterised in that** the dielectric layer with a low refractive index comprises an oxide or a nitride having a low refractive index, preferably SiO₂.

15. The assembly as claimed in any one of the preceding claims, **characterised in that** the substrate (1) comprises a glass, a glass ceramic or a synthetic material.

16. The assembly as claimed in any one of the preceding claims, **characterised in that** the fluoresceable material comprises an organic adhesive layer (3) and a fluoresceable biological material (4).

17. The assembly as claimed in claim 16, **characterised in that** the organic adhesive layer comprises aminosilane, aminopropyl silane, epoxy silane or hydrogel layers.

18. The assembly as claimed in claim 16 or 17, **characterised in that** the biological material comprises cells, nucleic acids, proteins, peptides and hydrocarbons.

19. The use of an assembly as claimed in any one of the preceding claims 1 to 18 as a microarray.

20. The use of an assembly as claimed in any one of the preceding claims 1 to 18 as a sample carrier in a fluorescence detection system.

21. The use of an assembly as claimed in any one of claims 1 to 18 as a lamp.

22. The assembly as claimed in any one of the preceding claims 1 to 18 formed as a fluorescent tube.

23. An assembly for measuring fluorescence, **characterised by** an assembly as claimed in any of the preceding claims 1 to 18 as a sample carrier.

24. The assembly as claimed in any one of the preceding claims 1 to 18, **characterised by** a fluorescence-enhancing coating resistant to reagents used during analysis and/or a cleaning process.

25. The assembly as claimed in any one of the preceding claims 1 to 18, **characterised by** a fluorescence-enhancing coating having layers produced by means of plasma-enhanced vapour deposition.

26. The assembly as claimed in any one of the preceding claims 1 to 18, **characterised by** a fluorescence-enhancing coating having an interference layer system, in which the intensity maximum of the amplitude square of the excitation light in the fluoresceable material or in the area near or on the surface of the fluorescence-enhancing coating has a half-width of no more than 120 nanometres, preferably no more than 100 nanometres.

## Revendications

1. Agencement pour le renforcement de fluorescence, lequel comporte
- un substrat (1),
- un revêtement renforçant la fluorescence et appliqué sur le substrat, et
- un matériau susceptible de fluorescence et se trouvant sur le revêtement, qui émet de la lumière dans la plage de longueurs d'onde d'émission λ_{E} en cas d'exposition avec de la lumière d'excitation d'une longueur d'onde d'excitation λ_{A},
le revêtement renforçant la fluorescence comportant un système de couche d'interférence (2) réfléchissant au moins la lumière d'excitation à base de couches diélectriques à réfringence élevée et faible, et le matériau susceptible de fluorescence étant disposé sur le revêtement dans la zone présentant le maximum d'amplitude de champ électrique de l'onde stationnaire se formant en cas d'exposition avec la lumière d'excitation, présentant la longueur d'onde d'excitation λ_{A},
**caractérisé en ce que** le revêtement renforçant la fluorescence présente des maxima du carré de l'amplitude de champ dans le cas de plusieurs longueurs d'onde dans la plage spectrale visible à la surface du revêtement renforçant la fluorescence et le système de couche d'interférence est formé de telle sorte que le rapport entre le carré d'amplitude d'un maximum du carré d'amplitude pour une première longueur d'onde et un maximum voisin pour une seconde longueur d'onde correspond à au moins 10/1, avec une préférence particulière, à au moins 50/1.

2. Agencement selon la revendication 1, **caractérisé en ce que** le matériau susceptible de fluorescence présente une épaisseur qui est inférieure à un quart de la longueur d'onde d'excitation λ_{A}.

3. Agencement selon l'une quelconque des revendications précédentes, **caractérisé en ce que** le système de couche d'interférence entraîne un rapport de phases de la lumière d'excitation de telle sorte que, directement sur la surface ou dans la plage d'une demi-longueur d'ondé, de préférence une longueur de quart d'onde au-dessus de la surface entre la lumière incidente et la lumière réfléchie, on arrive à l'interférence constructive et une intensité de champ électrique maximale se forme dans la zone du matériau fluorescent.

4. Agencement selon l'une quelconque des revendications précédentes, **caractérisé en ce que** le système de couche d'interférence est conçu de telle sorte que le rapport de phases de la lumière d'excitation reste uniforme le long de la surface dans la zone du matériau susceptible de fluorescence.

5. Agencement selon l'une quelconque des revendications précédentes, **caractérisé en ce que** la surface du revêtement renforçant la fluorescence est disposée dans la plage allant jusqu'à au maximum 50 nanomètres au-dessous du maximum du carré de l'amplitude de champ de l'onde stationnaire, se formant en cas d'exposition avec la lumière d'excitation, avec la longueur d'onde d'excitation λ_{A}.

6. Agencement selon l'une quelconque des revendications précédentes, **caractérisé en ce que** le revêtement se compose d'un système de couche d'interférence (2) avec en alternance de façon successive des couches (H) à haute réfringence et des couches (L) à faible réfringence, lesquelles présentent chacune une épaisseur de couche optique qui correspond à un quart de la longueur d'onde d'excitation λ_{A}.

7. Agencement selon la revendication 6, **caractérisé en ce que** celui-ci présente la conception substrat / (HL)ⁿ /matériau susceptible de fluorescence, ou substrat / (HL)ⁿ /surface du revêtement renforçant la fluorescence, avec n > 1, de préférence n ≥ 4, avec une préférence particulière pour n ≥ 8.

8. Agencement selon la revendication 6, **caractérisé en ce que** celui-ci présente la conception substrat / L /(HL)ⁿ / matériau susceptible de fluorescence ou substrat /L / (HL)ⁿ / surface du revêtement renforçant la fluorescence, avec n > 1, de préférence n ≥ 4, avec une préférence particulière pour n ≥ 8.

9. Agencement selon la revendication 6, **caractérisé en ce que** le système de couche d'interférence (2) présente en supplément en double et de façon successive des couches (H) à haute réfringence et/ou en double et de façon successive des couches (L) à faible réfringence, qui présentent chacune une épaisseur de couche optique qui correspond à un quart de la longueur d'onde d'excitation λ_{A}.

10. Agencement selon l'une quelconque des revendications précédentes, **caractérisé en ce que** le système de couche d'interférence (2) est un filtre optique qui réfléchit la lumière dans la plage de la longueur d'onde d'excitation λ_{A}, sachant que la largeur de bande est égale à λ_{A}-20 nm ≤ λ_{A} ≤ λ_{A}+20 nm, de préférence λ_{A}-10 nm ≤ λ_{A} ≤ λ_{A}+10 nm, et le degré de réflexion dans la zone de bande est supérieur à 50 %, de préférence supérieur à 80 %.

11. Agencement selon l'une quelconque des revendications précédentes, **caractérisé en ce que** le système de couche d'interférence (2) est un filtre optique qui transmet de la lumière dans la plage de la longueur d'onde d'émission λ_{E}.

12. Agencement selon l'une quelconque des revendications précédentes, **caractérisé en ce que** le revêtement renforçant la fluorescence renforce de la lumière d'excitation avec une longueur d'onde d'excitation de 535 nanomètres et de 635 nanomètres dans la zone du matériau susceptible de fluorescence.

13. Agencement selon l'une quelconque des revendications précédentes, **caractérisé en ce que** la couche diélectrique à haute réfringence comporte un oxyde ou un nitrure à haute réfringence, de préférence Al₂O₃, TiO₂, Ta₂O₅, Nb₂O₅, HfO₂ ou ZrO₂.

14. Agencement selon l'une quelconque des revendications précédentes, **caractérisé en ce que** la couche diélectrique à faible réfringence comporte un oxyde ou un nitrure à faible réfringence, de préférence du SiO₂.

15. Agencement selon l'une quelconque des revendications précédentes, **caractérisé en ce que** le substrat (1) comporte un verre, une vitrocéramique ou une matière plastique.

16. Agencement selon l'une quelconque des revendications précédentes, **caractérisé en ce que** le matériau susceptible de fluorescence comporte une couche adhérente (3) organique et du matériau (4) biologique susceptible de fluorescence.

17. Agencement selon la revendication 16, **caractérisé en ce que** la couche adhérente organique comporte des aminosilanes, des aminopropylsilanes, des silanes époxy ou des couches d'hydrogel.

18. Agencement selon la revendication 16 ou 17, **caractérisé en ce que** le matériau biologique comporte des cellules, des acides nucléiques, des protéines, des peptides et des hydrocarbures.

19. Utilisation d'un agencement selon l'une quelconque des revendications 1 à 18 précédentes sous forme de microréseau.

20. Utilisation d'un agencement selon l'une quelconque des revendications 1 à 18 précédentes comme support d'échantillon d'un système de détection de fluorescence.

21. Utilisation d'un agencement selon l'une quelconque des revendications 1 à 18 précédentes comme appareil d'éclairage.

22. Agencement selon l'une quelconque des revendications 1 à 18 précédentes, conçu comme tube fluorescent.

23. Agencement pour la mesure de fluorescence, **caractérisé par** un agencement selon l'une quelconque des revendications 1 à 18 précédentes comme support d'échantillon.

24. Agencement selon l'une quelconque des revendications 1 à 18 précédentes, **caractérisé par** un revêtement renforçant la fluorescence, résistant vis-à-vis des réactifs lors de l'analyse et/ou lors d'un processus de nettoyage.

25. Agencement selon l'une quelconque des revendications 1 à 18 précédentes, **caractérisé par** un revêtement renforçant la fluorescence avec des couches fabriquées par évaporation assistée par des ions de plasma.

26. Agencement selon l'une quelconque des revendications 1 à 18 précédentes, **caractérisé par** un revêtement renforçant la fluorescence avec un système de couche d'interférence, dans lequel le maximum de l'intensité du carré d'amplitude de la lumière d'excitation dans le matériau susceptible de fluorescence, ou dans la zone située à proximité ou sur la surface du revêtement renforçant la fluorescence, présente une largeur de valeur moyenne maximale de 120 nanomètres, de préférence au maximum 100 nanomètres.
